# EUROPEAN PATENT APPLICATION

(11) **EP 3 273 019 A1**
(43) Date of publication of application: **24.01.2018**
(21) Application number: 17175160.5
(22) Date of filing: 09.06.2017
(51) Int. Cl.: F01M 13/04

(54) **GAS-LIQUID SEPARATION DEVICE FOR BLOW-BY GAS IN ENGINE AND ENGINE**

(30) Priority: 10.06.2016 JP 2016115970
(71) Applicant: Yamaha Hatsudoki Kabushiki Kaisha, Iwata-shi Shizuoka 438-8501 (JP)
(72) Inventor: SUZUKI, Katsuhiro, Iwata-shi, Shizuoka 438-8501 (JP)
(74) Representative: Grünecker Patent- und Rechtsanwälte PartG mbB

(57) **Abstract**

A gas-liquid separation device includes a gas-liquid separation chamber provided in a head cover configured to form a valve gear chamber, a partition wall configured to change a direction of blow-by gas that flows in the gas-liquid separation chamber, and a blow-by gas suction passage extending from the gas-liquid separation chamber to an intake-side valve gear chamber. The upstream end of the blow-by gas suction passage forms an opening in the vicinity of a bottom wall of the valve gear chamber (intake-side valve gear chamber). It is possible to provide a gas-liquid separation device for blow-by gas in an engine capable of removing an oil mist contained in blow-by gas while employing a compact and simple gas-liquid separation structure.

## Description

The present invention relates to a gas-liquid separation device for blow-by gas in an engine and to an engine with such device. As a gas-liquid separation device for blow-by gas in a vehicle engine, conventionally, there exists a device provided in a head cover as described in, for example, Japanese Patent No. 2647951 (to be simply referred to as JP 2647951 A hereinafter). The engine disclosed in JP 2647951 A is mounted on the engine room of a vehicle. The engine is mounted on a vehicle body in a state in which a cylinder head is located above a cylinder block.

The cylinder head of the engine includes a valve gear including an intake valve, an exhaust valve, an intake camshaft, an exhaust camshaft, and the like. The valve gear is stored in a valve gear chamber formed between the cylinder head and the head cover. The intake valve and the exhaust valve extend through the bottom of the valve gear chamber.

A gas-liquid separation device for blow-by gas is provided on a portion of the head cover facing the bottom of the valve gear chamber and corresponding to an intake camshaft. The gas-liquid separation device for blow-by gas includes a gas-liquid separation chamber separated from the valve gear chamber and extending in parallel to the camshaft, and a plurality of partition walls configured to form a blow-by gas passage having a serpentine shape in the gas-liquid separation chamber. The blow-by gas inlet of the gas-liquid separation chamber forms an opening in the upper portion of the valve gear chamber. On the other hand, the blow-by gas outlet of the gas-liquid separation chamber is connected to an intake air passage via a pipe.

The blow-by gas inlet of the gas-liquid separation chamber forms an opening in the upper portion of the valve gear chamber in a direction toward the cylinder head. For this reason, the negative pressure (to be referred to as an intake negative pressure hereinafter) in the intake air passage is propagated to the blow-by gas passage in the gas-liquid separation chamber via the pipe, and blow-by gas in the valve gear chamber is sucked from the blow-by gas inlet to the gas-liquid separation chamber.

The intake negative pressure is also propagated from the gas-liquid separation chamber to a crank chamber on the cylinder block side via the valve gear chamber. For this reason, the blow-by gas in the crank chamber and mist-like oil particles (to be referred to as an oil mist hereinafter) mixed into the blow-by gas are sucked from the cylinder block side to the valve gear chamber by the negative intake pressure. By the momentum of suction to the valve gear chamber, the blow-by gas and the oil mist tend to directly move upward in the valve gear chamber and stay near the blow-by gas inlet of the gas-liquid separation chamber.

On the other hand, in the valve gear chamber, a camshaft rotates at a high speed, and an oil mist is scattered anew from the valve gear chamber by the centrifugal force. Part of the scattered oil mist is scattered to the vicinity of the blow-by gas inlet in the upper portion of the valve gear chamber, and sucked into the gas-liquid separation chamber via the blow-by gas inlet together with the blow-by gas and oil mist sucked from the cylinder block side.

The blow-by gas sucked into the gas-liquid separation chamber flows through the blow-by gas passage having a serpentine shape. At this time, oil contained in the blow-by gas adheres to the wall surfaces or partition walls of the blow-by gas passage, and the oil is captured. The oil is allowed to flow from an oil return hole formed in the bottom of the gas-liquid separation chamber to the valve gear chamber.

In the gas-liquid separation device for blow-by gas in the engine shown in JP 2647951 A, the amount of oil mist contained in the blow-by gas sucked into the gas-liquid separation chamber is large. The amount of oil mist probably increases because of the following two phenomena. As the first phenomenon, the oil mist sucked from the cylinder head side to the valve gear chamber readily stays on the upper side of the valve gear chamber. As the second phenomenon, the oil mist that has scattered according to the rotation of the camshaft is also sucked into the blow-by gas inlet.

As a result, in the gas-liquid separation device for blow-by gas in the engine shown in JP 2647951 A, the gas-liquid separation chamber needs to be bulky to remove the large amount of oil mist sucked into the gas-liquid separation chamber. There are two reasons. As the first reason, a gas-liquid separation chamber having a large volume needs to be formed to form a long blow-by gas passage. As the second reason, a complex gas-liquid separation structure needs to be employed.

However, in the engine mounted on the engine room of a vehicle, since the height of the head cover is limited by the engine hood, there is a limitation in forming a large gas-liquid separation chamber. In addition, since the complex gas-liquid separation structure requires many parts and much man-hour for assembly, the manufacturing cost is high.

It is the object of the present invention to provide a gas-liquid separation device for blow-by gas in an engine and an Engine with such a device capable of removing an oil mist contained in blow-by gas while employing a compact and simple gas-liquid separation structure.

According to the present invention said object is solved by a gas-liquid separation device for blow-by gas in an engine having the features of independent claim 1. Moreover said object is solved by an engine with such device. Preferred embodiments are laid down in the dependent claims.

Accordingly, there is provided a gas-liquid separation device for blow-by gas in an engine, including a head cover configured to form a valve gear chamber in cooperation with a cylinder head, a gas-liquid separation chamber provided in the head cover and including a blow-by gas inlet and a blow-by gas outlet, a partition wall provided in the gas-liquid separation chamber and configured to change a direction of blow-by gas that flows between the blow-by gas inlet and the blow-by gas outlet, and a blow-by gas suction passage connected to the blow-by gas inlet and extending from the gas-liquid separation chamber to the valve gear chamber, wherein an upstream end of the blow-by gas suction passage forms an opening in a vicinity of a bottom wall of the valve gear chamber.

### Brief Description of the Drawings

Fig. 1 is a front view showing an engine including a gas-liquid separation device for blow-by gas in an engine according to a preferred embodiment in a state in which a cylinder head portion is cut away, and a crank case is not illustrated;
Fig. 2 is a side view of the engine;
Fig. 3 is a plan view of a cylinder head, which illustrates only the two ends of the cylinder head;
Fig. 4 is a sectional view of a gas-liquid separation chamber viewed from the axial direction of a crankshaft, a cutaway position thereof is a position indicated by a line IV - IV in Fig. 3;
Fig. 5 is a sectional view of the main part in Fig. 2 taken along a line V - V;
Fig. 6 is a sectional view of the gas-liquid separation device in Fig. 2 taken along a line VI - VI; and
Fig. 7 is a longitudinal sectional view of the gas-liquid separation device, whose cutaway position is a position indicated by a line VII - VII in Fig. 6.

### Description of the Preferred Embodiment

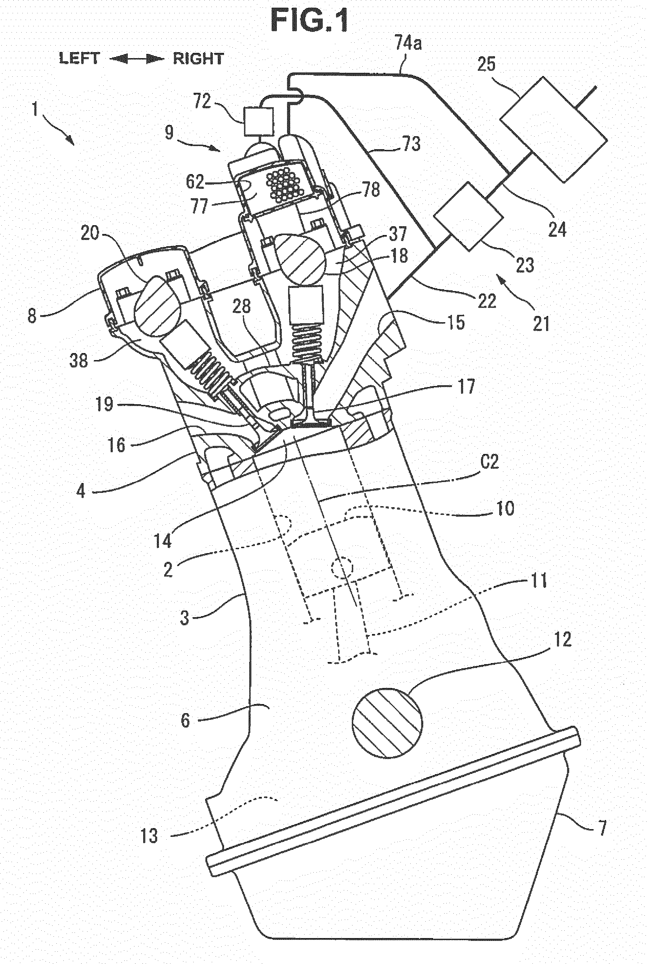

A gas-liquid separation device for blow-by gas in an engine according to a preferred embodimentwill now be described in detail with reference to figures 1 to 7.

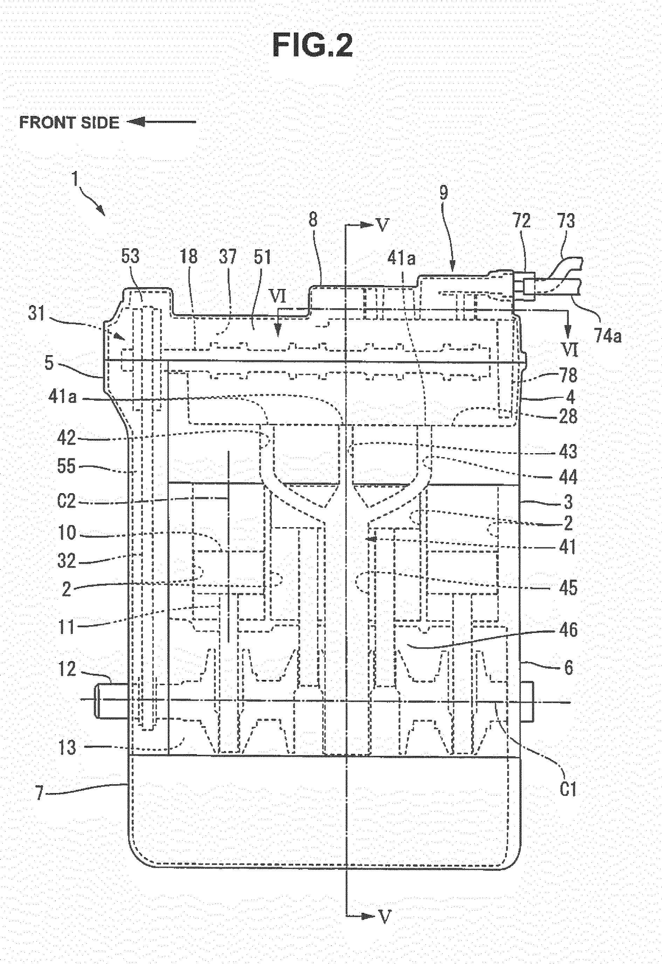

An engine 1 shown in Fig. 1 is a DOHC 4-cylinder engine mounted on a vehicle. As shown in Fig. 2, the engine 1 includes a cylinder block 3 with four cylinder holes 2, a cylinder head 4 attached to the upper end of the cylinder block 3, a transmission case 5 attached to one end sides of the cylinder block 3 and the cylinder head 4, an oil pan 7 attached to a crank case 6 at the lower end of the cylinder block 3, a head cover 8 attached to the upper end of the cylinder head 4, and a gas-liquid separation device 9 for blow-by gas provided in the head cover 8.

A piston 10 is movably fitted in each of the four cylinder holes 2. Each piston 10 is connected to a crankshaft 12 via a connecting rod 11. As shown in Fig. 1, the crankshaft 12 is stored in a crank chamber 13 formed between the crank case 6 and the oil pan 7 and rotatably supported by the crank case 6 (cylinder block 3). An explanation will be made while defining one end side in the axial direction of the crankshaft 12 where the transmission case 5 is located as the front side of the engine 1. In addition, a direction orthogonal to the sheet surface of Fig. 1, that is, a direction orthogonal to an axis C1 of the crankshaft 12 and a cylinder axis C2 will be referred to as the left-and-right direction of the engine 1.

As shown in Fig. 1, the cylinder head 4 includes a concave portion 14 that is configured to form a combustion chamber, and is provided at a position corresponding to the cylinder hole 2 of each cylinder. The cylinder head 4 also includes an intake port 15 and an exhaust port 16 in which respective one end sides form openings in the concave portion 14. In addition, the cylinder head 4 includes an intake valve 17 and an intake camshaft 18, and an exhaust valve 19 and an exhaust camshaft 20. The intake valve 17 is driven by the intake camshaft 18 to open/close the intake port 15. The exhaust valve 19 is driven by the exhaust camshaft 20 to open/close the exhaust port 16.

The engine 1 according to this embodiment is mounted on the engine room of a vehicle body (not shown) while tilting such that the intake camshaft 18 is located higher than the exhaust camshaft 20.

The other end (upstream end) of the intake port 15 is connected to an intake device 21 on one side (the right side viewed from the front of the engine) of the cylinder head 4 in the left-and-right direction. The intake device 21 includes a throttle valve 23 connected to the upstream end of the intake port 15 via a downstream intake air passage 22, and an air cleaner 25 connected to the throttle valve 23 via an upstream intake air passage 24. The throttle valve 23 is opened/closed in synchronism with an accelerator operation performed by the driver.

The other end (downstream end) of the exhaust port 16 is connected to an exhaust device (not shown) on the other side of the cylinder head 4 in the left-and-right direction.

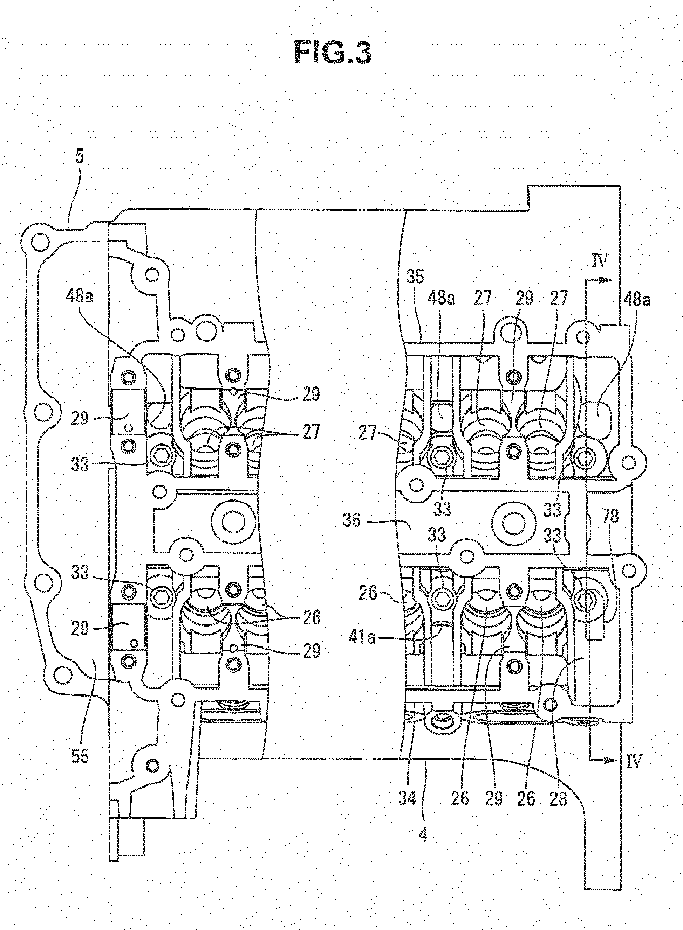

The intake valve 17 and the exhaust valve 19 each include two valves per cylinder. The intake valves 17 and exhaust valves 19 are inserted into intake valve hole portions 26 and exhaust valve hole portions 27 formed in the cylinder head 4 as shown in Fig. 3, and movably supported. The hole portions 26 and 27 are provided in a bottom wall 28 (to be described later) of the cylinder head 4.

As shown in Fig. 2, the intake camshaft 18 and the exhaust camshaft 20 extend in parallel to the crankshaft 12 and are rotatably supported by the cylinder head 4 with one end sides (the ends on the front side of the engine) projecting from the cylinder head 4. The intake camshaft 18 and the exhaust camshaft 20 are supported by a plurality of journal portions 29 (see Fig. 3) provided in the cylinder head 4. The journal portions 29 are provided in portions where the intake camshaft 18 and the exhaust camshaft 20 project from the cylinder head 4 to the front side of the engine, between each pair of intake valve hole portions 26 in each cylinder, and between each pair of exhaust valve hole portions 27 in each cylinder.

The one end sides of the intake camshaft 18 and the exhaust camshaft 20 projecting from the cylinder head 4 are connected to the crankshaft 12 via a transmission gear 31, as shown in Fig. 2. The transmission gear 31 transmits a rotation using a wrap-type transmission member 32 such as a timing chain or a timing belt. The transmission gear 31 is stored in the transmission case 5 attached to one end sides of the cylinder block 3 and the cylinder head 4. The case 5 having a box shape forms openings in both directions, that is, toward the upper side and toward the rear side of the engine. An opening portion of the case 5 formed in the direction toward the upper side is closed by the head cover 8 (to be described later). An opening portion of the case 5 formed in the direction toward the rear side of the engine is closed by the cylinder block 3 and the cylinder head 4.

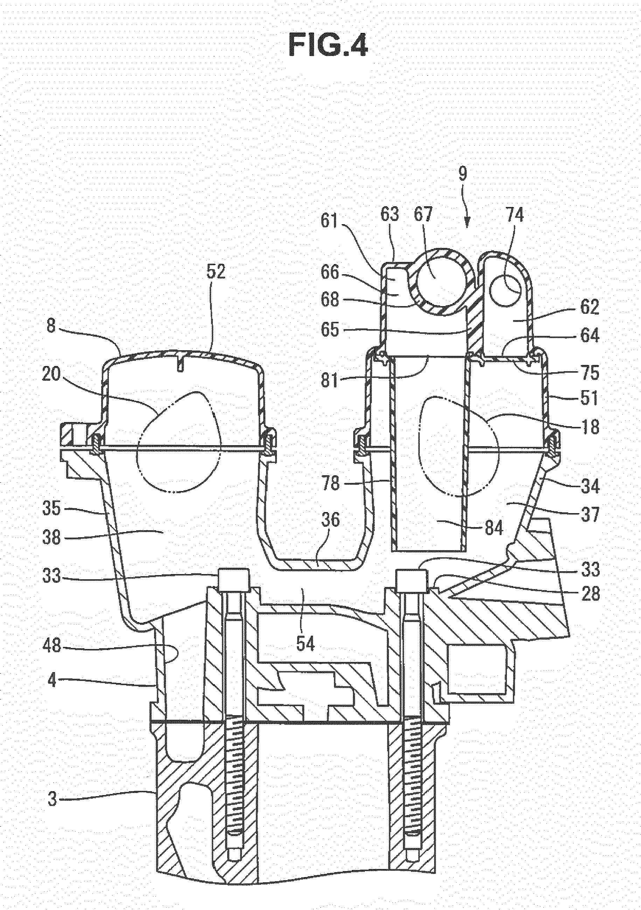

As shown in Fig. 4, the cylinder head 4 is fixed to the cylinder block 3 by a plurality of head bolts 33 extending through the bottom wall 28. The head bolts 33 are screwed into the cylinder block 3 in a state in which they extend through the bottom wall 28. The positions where the head bolts 33 are provided are a plurality of positions in the axial direction (the left-and-right direction in Fig. 3) of the crankshaft 12, as shown in Fig. 3, and on both sides in the left-and-right direction (the vertical direction in Fig. 3) orthogonal to the axial direction of the crankshaft 12 and the cylinder axis C (see Fig. 1). The above-described "plurality of positions in the axial direction of the crankshaft 12" are the positions at the two ends of the cylinder head 4 and the positions between the cylinders.

The cylinder head 4 according to this embodiment includes the above-described bottom wall 28, an intake-side vertical wall 34 extending upward from the bottom wall 28 and surrounding the intake camshaft 18, an exhaust-side vertical wall 35 extending upward from the bottom wall 28 and surrounding the exhaust camshaft 20, and a ceiling wall 36 that connects the vertical walls 34 and 35, as shown in Fig. 4. The intake-side vertical wall 34 and the exhaust-side vertical wall 35 are formed integrally with the bottom wall 28. The head cover 8 (to be described later) is attached to the upper ends of the intake-side vertical wall 34 and the exhaust-side vertical wall 35. The bottom wall 28 and the intake-side vertical wall 34 form an intake-side valve gear chamber 37 in cooperation with the head cover 8. The bottom wall 28 and the exhaust-side vertical wall 35 form an exhaust-side valve gear chamber 38 in cooperation with the head cover 8.

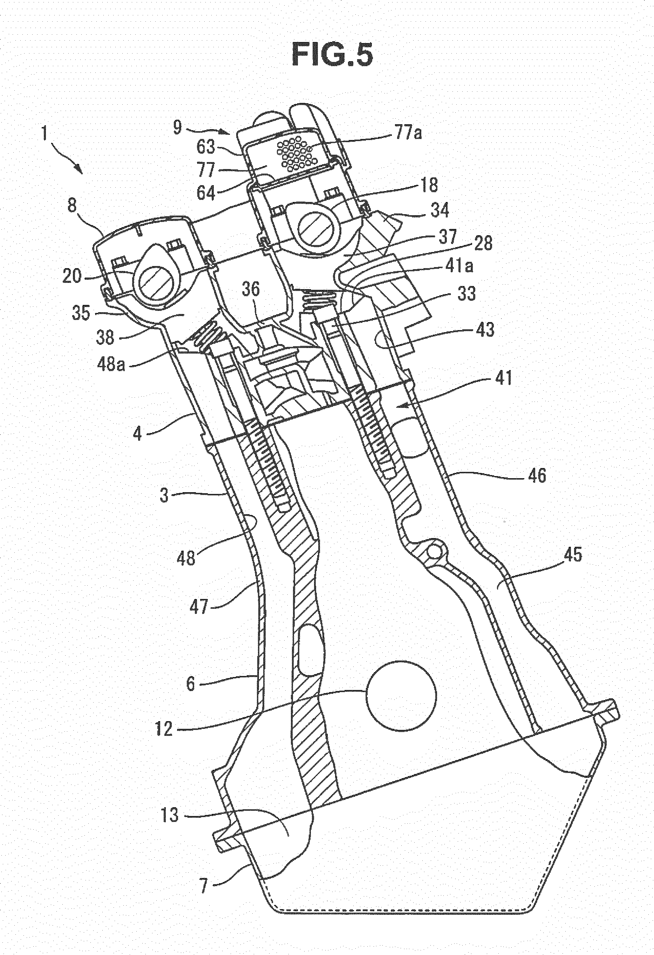

As shown in Figs. 3 and 5, openings 41a at the downstream end of a communication path 41 are formed at portions adjacent to the head bolts 33 in a portion of the bottom wall 28 of the cylinder head 4 forming the intake-side valve gear chamber 37. The openings 41 a at the downstream end of the communication path 41 are provided at a plurality of positions adjacent to the head bolts 33 between the cylinders. As shown in Fig. 2, the communication path 41 is formed from first to third branch positions 42 to 44 and an upstream portion 45. The first to third branch positions 42 to 44 extend in parallel to the cylinder axis C2 from the openings 41 a at the downstream end to the side of the cylinder block 3. The upstream portion 45 connects the first to third branch positions 42 to 44 and extends in the cylinder block 3 toward the crank chamber 13.

As shown in Fig. 5, the upstream portion 45 is formed along one side wall 46 of the cylinder block 3 in the left-and-right direction. The width of the upstream portion 45 in the axial direction of the crankshaft 12 is larger than the width of the engine 1 in the left-and-right direction (the thickness direction of the side wall 46). The upstream end (the lower end in Fig. 5) of the upstream portion 45 forms an opening in the crank chamber 13. For this reason, the intake-side valve gear chamber 37 communicates with the crank chamber 13 via the communication path 41.

An oil return passage 48 is provided on the other side wall 47 of the cylinder block 3. The lower end of the oil return passage 48 forms an opening in the crank chamber 13. The upper portion of the oil return passage 48 extends from the cylinder block 3 into the cylinder head 4. The upper end of the oil return passage 48 forms an opening in a portion of the bottom wall 28 of the cylinder head 4 forming the exhaust-side valve gear chamber 38. Openings 48a at the upper end of the oil return passage 48 are provided in the bottom wall 28 between the cylinders and at the two ends of the crankshaft 12 in the axial direction, as shown in Fig. 3. The openings 48a are formed at the lowermost positions in the valve gear chambers (the intake-side valve gear chamber 37 and the exhaust-side valve gear chamber 38) between the cylinder head 4 and the head cover 8.

The head cover 8 is molded into a predetermined shape using a plastic material. In the head cover 8, as shown in Fig. 4, an intake-side cover portion 51 connected to the intake-side vertical wall 34, an exhaust-side cover portion 52 connected to the exhaust-side vertical wall 35, and a case cover portion 53 (see Fig. 2) connected to the upper end of the case 5 are integrally formed. The intake-side cover portion 51 forms the intake-side valve gear chamber 37 in cooperation with the intake-side vertical wall 34 and the bottom wall 28 of the cylinder head 4. The exhaust-side cover portion 52 forms the exhaust-side valve gear chamber 38 in cooperation with the exhaust-side vertical wall 35 and the bottom wall 28 of the cylinder head 4. As shown in Fig. 4, the intake-side valve gear chamber 37 and the exhaust-side valve gear chamber 38 communicate with each other via a communication chamber 54 formed between the ceiling wall 36 and the bottom wall 28 of the cylinder head 4. In this embodiment, a series of spaces formed by the intake-side valve gear chamber 37, the exhaust-side valve gear chamber 38, and the communication chamber 54 corresponds to a "valve gear chamber" in the present invention.

As shown in Fig. 2, the case cover portion 53 of the head cover 8 is connected to the upper end of the above-described transmission case 5. A transmission chamber 55 surrounded by the transmission case 5, the cylinder head 4, and the cylinder block 3 is formed under the case cover portion 53. The transmission gear 31 that transmits the rotation of the crankshaft 12 to the intake camshaft 18 and the exhaust camshaft 20 is stored in the transmission chamber 55. The end of the cylinder head 4 on the front side of the engine is connected to the transmission chamber 55. The transmission chamber 55 communicates with the intake-side valve gear chamber 37 via the space above the intake camshaft 18 and also communicates with the exhaust-side valve gear chamber 38 via the space above the exhaust camshaft 20. Hence, the ends of the intake-side valve gear chamber 37 and the exhaust-side valve gear chamber 38 on the front side of the engine communicate with the crank chamber 13 via the transmission chamber 55.

As shown in Fig. 4, the intake-side cover portion 51 of the head cover 8 is provided with the gas-liquid separation device 9 for blow-by gas. The gas-liquid separation device 9 is configured to guide blow-by gas in the engine 1 to the intake device 21, and includes a gas-liquid separation chamber 61 configured to remove mist-like oil contained in the blow-by gas, and a fresh air chamber 62 configured to introduce fresh air into the crank chamber 13 and ventilate the engine 1.

The gas-liquid separation chamber 61 and the fresh air chamber 62 are formed between a box body 63 that forms an opening in the direction toward the lower side and a cover body 64 that closes the opening portion of the box body 63. In this embodiment, the box body 63 corresponds to a "main body formed integrally with the head cover" in the present invention, and the cover body 64 corresponds to a "cover body attached to the head cover" in the present invention. The box body 63 is formed integrally with the end of the intake-side cover portion 51 on the rear side of the engine and projects to the upper side of the other end (the end on the front side of the engine) of the intake-side cover portion 51.

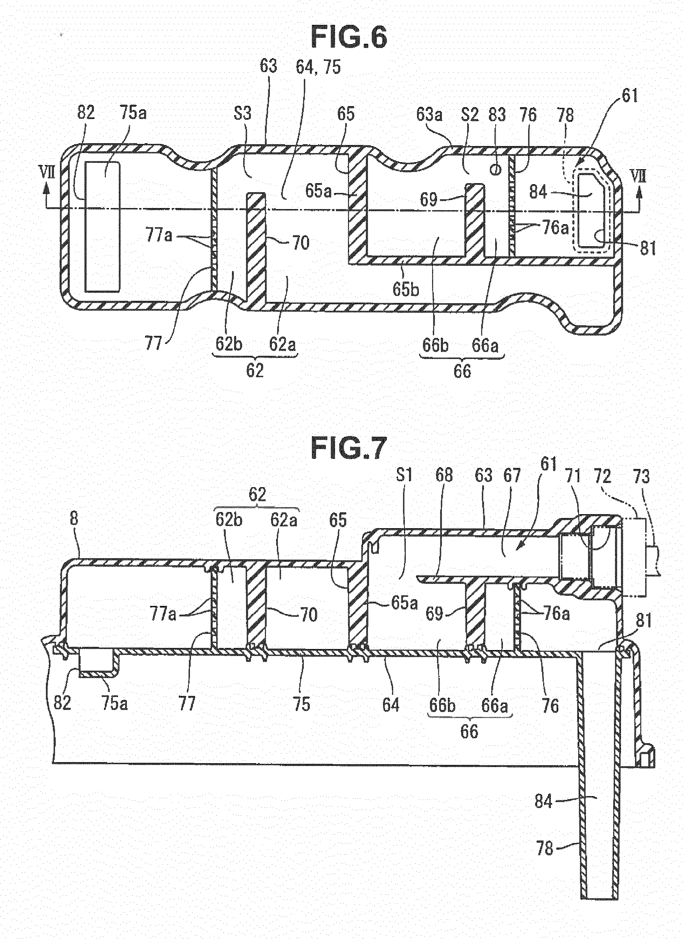

A partition 65 (see Figs. 4 and 6), a first partition wall 68 (see Figs. 4 and 7), a second partition wall 69 (see Figs. 6 and 7), and a third partition wall 70 are provided in the box body 63. The partition 65 separates the gas-liquid separation chamber 61 and the fresh air chamber 62. The first partition wall 68 divides the gas-liquid separation chamber 61 into a lower chamber 66 and an upper chamber 67. The second partition wall 69 divides the lower chamber 66 into an upstream portion 66a and a downstream portion 66b. The third partition wall 70 divides the fresh air chamber 62 into an upstream portion 62a and a downstream portion 62b. The partition 65, the first partition wall 68, the second partition wall 69, and the third partition wall 70 are formed integrally with the box body 63 by integral molding.

As shown in Fig. 6, the partition 65 includes a horizontal wall portion 65a and a vertical wall portion 65b. The horizontal wall portion 65a extends from one side portion (the upper side portion in Fig. 6) of the box body 63 close to the exhaust camshaft 20 into the box body 63 and divides the box body 63 in the axial direction of the crankshaft 12. The vertical wall portion 65b extends in the box body 63 from the distal end of the horizontal wall portion 65a to the rear side of the engine. Hence, the gas-liquid separation chamber 61 is formed in the box body 63 on the rear side of the engine and on one side close to the exhaust camshaft 20.

A blow-by gas outlet 71 is formed at the end of the upper chamber 67 of the gas-liquid separation chamber 61 on the rear side of the engine, as shown in Fig. 7. One end of a blow-by gas hose 73 is attached to the blow-by gas outlet 71 via a PCV (Positive Crankcase Ventilation) valve 72. The other end of the blow-by gas hose 73 is connected to the downstream intake air passage 22, as shown in Fig. 1. The PCV valve 72 opens when the magnitude of an intake negative pressure propagated from the downstream intake air passage 22 via the blow-by gas hose 73 exceeds a predetermined threshold. The upstream portion 62a (see Fig. 6) of the fresh air chamber 62 is formed at a position adjacent to the upper chamber 67 of the gas-liquid separation chamber 61 in the left-and-right direction of the engine 1. A fresh air inlet 74 is formed at the end of the upstream portion 62a on the rear side of the engine, as shown in Fig. 4. The fresh air inlet 74 communicates with the upstream intake air passage 24 via a fresh air hose 74a (see Fig. 1).

As shown in Fig. 7, a gap S1 is formed between the first partition wall 68 and the horizontal wall portion 65a of the partition 65.

A gap S2 is formed between the distal end (see Fig. 6) of the second partition wall 69 and a side wall 63a of the box body 63.

A gap S3 is formed between the distal end of the third partition wall 70 and the side wall 63a of the box body 63.

As shown in Figs. 4 and 7, the cover body 64 is formed from a main plate portion 75 that closes the opening portion of the box body 63, a first partition plate portion 76 and a second partition plate portion 77 which project upward from the main plate portion 75, and a duct portion 78 projecting downward from the end of the main plate portion 75 on the rear side of the engine. The main plate portion 75, the first partition plate portion 76, the second partition plate portion 77, and the duct portion 78 are made of a plastic material and integrally formed by integral molding. The cover body 64 is attached to the box body 63 by welding the main plate portion 75 to the box body 63. In this embodiment, the duct portion 78 corresponds to a "duct" in the present invention.

As shown in Figs. 6 and 7, a blow-by gas inlet 81 is formed at the end on the rear side of the engine in a portion of the main plate portion 75 forming the lower chamber 66 of the gas-liquid separation chamber 61. In addition, a fresh air outlet 82 is formed at the end on the front side of the engine in a portion of the main plate portion 75 forming the downstream portion 62b of the fresh air chamber 62. The fresh air outlet 82 is formed in a passage forming portion 75a projecting downward from the main plate portion 75, and forms an opening in the upper portion of the intake-side valve gear chamber 37 in the direction toward the front side of the engine. As shown in Fig. 2, the fresh air outlet 82 is provided at a portion in the intake-side valve gear chamber 37 close to the transmission chamber 55.

The first partition plate portion 76 is arranged on the rear side of the engine (upstream side) with respect to the second partition wall 69 in the gas-liquid separation chamber 61, and divides the upstream portion 66a of the lower chamber 66 to the side of the blow-by gas inlet 81 and the side of the second partition wall 69. As shown in Fig. 6, an oil return hole 83 formed from a through hole is formed in the main plate portion 75 between the first partition plate portion 76 and the second partition wall 69. The oil return hole 83 is formed at a portion of the main plate portion 75, which is the lowest in a state in which the engine 1 is mounted in a vehicle body (not shown). As shown in Fig. 1, the engine 1 according to this embodiment is mounded in a vehicle body such that the exhaust-side valve gear chamber 38 is located lower than the intake-side valve gear chamber 37. For this reason, the oil return hole 83 is provided at the end of the main plate portion 75 close to the exhaust-side valve gear chamber 38.

A plurality of through holes 76a are formed in the first partition plate portion 76. In this embodiment, the first partition plate portion 76 and the above-described second partition wall 69 correspond to a "partition wall" in the present invention.

The second partition plate portion 77 divides the downstream portion 62b of the fresh air chamber 62 to the side of the third partition wall 70 and the side of the fresh air outlet 82. A plurality of through holes 77a (see Fig. 5) are formed in the second partition plate portion 77 as well.

As shown in Fig. 4, the duct portion 78 extends downward for the blow-by gas inlet 81 of the gas-liquid separation chamber 61. The interior of the duct portion 78 forms a blow-by gas suction passage 84 connected to the blow-by gas inlet 81 and extending from the gas-liquid separation chamber 61 into the intake-side valve gear chamber 37. The lower end (the upstream end of the blow-by gas suction passage 84) of the duct portion 78 forms an opening in the vicinity of the bottom wall 28 through which the head bolts 33 extend in the cylinder head 4. The vicinity of the bottom wall 28 is preferably a point between the intake camshaft 18 and the bottom wall 28 of the cylinder head 4 viewed from the axial direction of the crankshaft 12, and preferably, the vicinity of the head bolts 33. The direction toward which the opening of the lower end of the duct portion 78 is formed is the direction toward the bottom wall 28.

As shown in Fig. 2, the lower end of the duct portion 78 is provided at a position spaced apart from the openings 41 a at the downstream ends of the above-described first to third branch positions 42 to 44 in the axial direction of the crankshaft 12. The lower end of the duct portion 78 according to this embodiment is provided at the end (the end on the rear side of the engine) of the intake-side valve gear chamber 37 with one end connected to the transmission chamber 55 on the side opposite to the transmission chamber 55. For this reason, the blow-by gas suction passage 84 according to this embodiment is provided at the end of the intake-side valve gear chamber 37 in the axial direction of the intake camshaft 18 at a position overlapping the intake camshaft 18 when viewed from the axial direction of the intake camshaft 18, as shown in Fig. 4.

In the gas-liquid separation device 9 for blow-by gas configured in the above-described way, at the time of engine operation, an intake negative pressure is propagated from the downstream intake air passage 22 to the PCV valve 72 via the blow-by gas hose 73. If the magnitude of the negative pressure exceeds a predetermined threshold, the PCV valve 72 opens, and the negative pressure is propagated into gas-liquid separation chamber 61. The negative pressure is propagated from the gas-liquid separation chamber 61 to the intake-side valve gear chamber 37 via the duct portion 78 (blow-by gas suction passage 84) and further propagated to the crank chamber 13 via the communication path 41.

On the other hand, at this time, since the negative pressure is also propagated from the fresh air outlet 82 forms an opening in the intake-side valve gear chamber 37 to the upstream intake air passage 24 via the fresh air chamber 62 and the fresh air hose 74a, fresh air in the upstream intake air passage 24 is introduced from the fresh air outlet 82 into the intake-side valve gear chamber 37. The fresh air flows in the intake-side valve gear chamber 37 toward the transmission chamber 55 in the direction in which the fresh air outlet 82 is directed.

When the intake negative pressure is propagated from the communication path 41 to the crank chamber 13, the blow-by gas in the crank chamber 13 is sucked into the upstream portion 45 of the communication path 41. The blow-by gas contains an oil mist.

When the blow-by gas is thus sucked into the communication path 41, and the pressure in the crank chamber 13 lowers, the gas containing fresh air in the intake-side valve gear chamber 37 flows into the crank chamber 13 via the transmission chamber 55. As a result, the crank chamber 13 is ventilated.

The blow-by gas sucked into the upstream portion 45 of the communication path 41 is sucked out from the upstream portion to the intake-side valve gear chamber 37 via the first to third branch positions 42 to 44 by the intake negative pressure. The blow-by gas sucked into the intake-side valve gear chamber 37 and the oil mist mixed in it directly advance to the opposite side of the cylinder block 3 by the momentum. The blow-by gas and the oil mist collide against the walls of the upper portion of the valve gear chamber formed from the cover body 64, the head cover 8, and the like and then turn toward the bottom of the intake-side valve gear chamber 37. At this time, the oil mist whose mass is larger than that of the gas is left and stays in the upper portion of the intake-side valve gear chamber 37, or is captured by the walls that the mist collides against. For this reason, the amount of oil mist mixed in the turned gas decreases. The gas and the oil mist which are turned by the upper portion of the intake-side valve gear chamber 37 and flow toward the bottom of the valve gear chamber 37 collide against the bottom wall 28 of the intake-side valve gear chamber 37. The oil mist is captured even when colliding against the bottom wall 28. As a result, the scattered amount of oil mist decreases in the vicinity of the bottom wall 28.

In the intake-side valve gear chamber 37, the intake camshaft 18 rotates at a high speed, and the oil mist is scattered anew from there by the centrifugal force. Even when scattered toward the bottom wall of the intake-side valve gear chamber 37, the oil mist never directly enters the blow-by gas suction passage 84.

According to this embodiment, since the blow-by gas suction passage 84 extends in the intake-side valve gear chamber 37, and the upstream end of the blow-by gas suction passage 84 forms an opening in the vicinity of the bottom wall 28 of the valve gear chamber 37, blow-by gas containing a little amount of oil mist is sucked into the blow-by gas suction passage 84.

The blow-by gas sucked into the blow-by gas suction passage 84 flows from the blow-by gas inlet 81 of the gas-liquid separation chamber 61 into the upstream portion 66a of the lower chamber 66 and passes through a number of through holes 76a of the first partition plate portion 76. At this time, part of the oil mist contained in the blow-by gas adheres to the first partition plate portion 76. The blow-by gas that has passed through the through holes 76a flows into the upper chamber 67 via the gap S2 between the second partition wall 69 and the box body 63 and the gap S1 between the first partition wall 68 and the partition 65. When the blow-by gas passes through the gaps S2 and S1, the direction of the flow of the blow-by gas is reversed. Hence, the particles of oil mist readily adhere to the side wall 63a of the box body 63 or the first partition wall 68 and the second partition wall 69.

The oil separated from the blow-by gas in the gas-liquid separation chamber 61 flows down from the oil return hole 83 to the intake-side valve gear chamber 37. In the intake-side valve gear chamber 37, oil scatters from the lubricated portion of the intake camshaft 18. The oil flowing down from the oil return hole 83 flows into the relatively low exhaust-side valve gear chamber 38 together with other oil portions in the intake-side valve gear chamber 37 and returns to the oil pan 7 via the oil return passage 48 forms an opening in the exhaust-side valve gear chamber 38.

The blow-by gas flowing into the upper chamber 67 of the gas-liquid separation chamber 61 is sucked from the blow-by gas outlet 71 into the downstream intake air passage 22 via the PCV valve 72 and the blow-by gas hose 73.

If the rotational speed of the engine 1 reaches a high rotation/high load operation range, the throttle valve 23 fully opens. Hence, the pressure in the downstream intake air passage 22 increases, and the PCV valve 72 closes. In this operation state, the intake negative pressure may be propagated from the upstream intake air passage 24 to the intake-side valve gear chamber 37 via the fresh air chamber 62, and the blow-by gas in the intake-side valve gear chamber 37 may be sucked into the upstream intake air passage 24 via the fresh air chamber 62. In this case, the direction of the flow of the blow-by gas is changed by the second partition plate portion 77, the third partition wall 70, and the partition 65 provided in the fresh air chamber 62, and the oil mist contained in the blow-by gas adheres to these members and the inner wall of the fresh air chamber 62 and is captured.

The gas-liquid separation device 9 according to this embodiment employs a simple gas-liquid separation structure formed only by providing a plurality of partitions in the compact gas-liquid separation chamber 61 formed from the box body 63 and the cover body 64. Since the blow-by gas suction passage 84 connected to the blow-by gas inlet 81 of the gas-liquid separation chamber 61 forms an opening in the vicinity of the bottom wall 28 where the scattered amount of oil mist is small, the amount of oil mist sucked from the blow-by gas suction passage 84 into the gas-liquid separation chamber 61 decreases.

According to this embodiment, since the amount of oil mist sucked into the gas-liquid separation chamber 61 is small, the gas-liquid separation chamber 61 can be made compact, and the structure can be simplified.

Hence, according to this embodiment, it is possible to provide a gas-liquid separation device for blow-by gas in an engine capable of removing an oil mist contained in blow-by gas while employing a compact and simple gas-liquid separation structure.

The upstream end of the blow-by gas suction passage 84 according to this embodiment forms the opening in the vicinity of the bottom wall 28 in the direction toward the bottom wall 28. For this reason, according to this embodiment, it is more difficult to suck the oil mist into the blow-by gas suction passage 84. It is therefore possible to provide a gas-liquid separation device for blow-by gas of higher performance.

The upstream end of the blow-by gas suction passage 84 is provided at a position spaced apart from the openings 41 a of the communication path 41 on the downstream side in the axial direction of the crankshaft 12. It is therefore possible to prevent the blow-by gas sucked to the intake-side valve gear chamber 37 from being directly sucked into the blow-by gas suction passage 84.

The blow-by gas suction passage 84 according to this embodiment is provided at the end of the intake-side valve gear chamber 37 in the axial direction of the intake camshaft 18 at a position overlapping the intake camshaft 18 when viewed from the axial direction of the intake camshaft 18. For this reason, the oil mist scattered from the intake camshaft 18 that rotates at a high speed hardly enters the blow-by gas suction passage 84. It is therefore possible to further reduce the oil mist sucked into the gas-liquid separation chamber 61.

Additionally, in this embodiment, when the blow-by gas in the crank chamber 13 is sucked into the gas-liquid separation chamber 61 via the communication path 41, the intake-side valve gear chamber 37, and the blow-by gas suction passage 84, fresh air is introduced from the transmission chamber 55 to the crank chamber 13. Hence, according to this embodiment, it is possible to provide a gas-liquid separation device for blow-by gas in an engine capable of ventilating the crank chamber 13.

The gas-liquid separation chamber 61 according to this embodiment is formed from the box body 63 and the cover body 64 with the duct portion 78. For this reason, since the gas-liquid separation chamber 61 and the blow-by gas suction passage 84 are formed by combining members in simple shapes, it is possible to inexpensively provide a gas-liquid separation device for blow-by gas in an engine.

In this embodiment, the vicinity of the bottom wall 28 in which the upstream end of the blow-by gas suction passage 84 forms the opening is a point between the intake camshaft 18 and the bottom wall 28 viewed from the axial direction of the crankshaft 12.

For this reason, the blow-by gas is sucked from the position where the scattered amount of oil mist is small into the blow-by gas suction passage 84. Hence, the amount of oil mist sucked from the blow-by gas suction passage 84 into the gas-liquid separation chamber 61 decreases.

In the above embodiment, an example in which the gas-liquid separation device 9 for blow-by gas according to the present teaching is provided in the 4-cylinder engine 1 has been described. However, the gas-liquid separation device 9 for blow-by gas according to the present teaching is not restricted by the number of cylinders. For this reason, the number of cylinders of the engine 1 can appropriately be changed.

The gas-liquid separation device is preferably arranged at the highest position in a state in which the engine is mounted in a vehicle. In this embodiment, the gas-liquid separation device 9 is provided on the intake side. If the exhaust side is higher, the gas-liquid separation device 9 is preferably provided on the exhaust side.

The present inventor considered that the gas-liquid separation chamber can be made compact if the amount of oil mist in blow-by gas sucked by the gas-liquid separation device is small. It was also found as a result of experiments that the amount of oil mist scattered in the valve gear chamber increases or decreases depending on the place. As a result of repetitive experiments, the present inventor found out that the scattered amount of oil mist is small in the vicinity of the bottom wall of the valve gear chamber and obtained the idea of the present teaching.

According to the present teaching, since the blow-by gas suction passage extends in the valve gear chamber, and the upstream end of the blow-by gas suction passage forms the opening in the vicinity of the bottom wall of the valve gear chamber, blow-by gas containing a little amount of oil mist can be introduced into the gas-liquid separation chamber. If the amount of oil mist sucked into the gas-liquid separation chamber is small, the gas-liquid separation chamber can be made compact, and the structure can be simplified.

The reason why the scattered amount of oil mist decreases in the vicinity of the bottom wall of the valve gear chamber is not clear. However, the following assumption is possible.

The blow-by gas sucked from the cylinder block side into the valve gear chamber by the action of the intake negative pressure and the oil mist mixed in it directly advance to the opposite side of the cylinder block by the momentum. The blow-by gas and the oil mist collide against the walls of the upper portion of the valve gear chamber formed from the bottom of the gas-liquid separation chamber, the head cover, and the like and then turn toward the bottom of the valve gear chamber. At this time, the oil mist whose mass is larger than that of the gas is left and stays in the upper portion of the valve gear chamber, or is captured by the walls that the mist collides against. For this reason, the amount of oil mist mixed in the turned gas decreases. The gas and the oil mist which are turned by the upper portion of the valve gear chamber and flow toward the bottom of the valve gear chamber collide against the bottom wall of the valve gear chamber. The oil mist is captured even when colliding against the bottom wall. As a result, the scattered amount of oil mist decreases in the vicinity of the bottom wall.

Note that in the valve gear chamber, the camshaft rotates at a high speed, and the oil mist is scattered anew from there by the centrifugal force. Even when the oil mist is scattered toward the bottom wall of the valve gear chamber, it never directly enters the oil return passage.

Hence, according to the present teaching, it is possible to provide a gas-liquid separation device for blow-by gas in an engine capable of removing an oil mist contained in blow-by gas while employing a compact and simple gas-liquid separation structure.

## Claims

1. A gas-liquid separation device for blow-by gas in an engine (1), comprising:
a head cover (8) configured to form a valve gear chamber (37) in cooperation with a cylinder head (4);
a gas-liquid separation chamber (61) provided in the head cover (8), and including a blow-by gas inlet (81) and a blow-by gas outlet (71);
a partition wall (69,76) provided in the gas-liquid separation chamber (61), and
configured to change a direction of blow-by gas that flows between the blow-by gas inlet (81) and the blow-by gas outlet (71); and
a blow-by gas suction passage (84) connected to the blow-by gas inlet (81), and
extending from the gas-liquid separation chamber (61) to the valve gear chamber (37),
wherein an upstream end of the blow-by gas suction passage (84) forms an opening in a vicinity of a bottom wall (28) of the valve gear chamber (37).

2. A device according to claim 1, wherein the upstream end of the blow-by gas suction passage (84) forms the opening in the vicinity of the bottom wall (28) in a direction toward the bottom wall (28).

3. A device according to claim 1 or 2, wherein the gas-liquid separation chamber (61) comprises:
a main body (63) that is formed in a box shape, and forms an opening in a direction toward the bottom wall (28), and is formed integrally with the head cover (8); and
a cover body (64) formed in a shape that closes the opening of the main body (63) and is attached to the head cover (8),
wherein the blow-by gas suction passage (84) includes a duct (78) formed in the cover body (64).

4. A device according to at least one of the claims 1 to 3, wherein the engine (1) further comprises a crank chamber (13) accommodating a crankshaft (12), and a camshaft (18).

5. A device according to claim 4, wherein the cylinder head (4) includes an opening (41 a) formed by a communication path (41) that allows the crank chamber (13) to communicate with the valve gear chamber (37), and
the upstream end of the blow-by gas suction passage (84) is provided at a position spaced apart from the opening (41 a) formed by the communication path (41) in an axial direction of the crankshaft (12).

6. A device according to claim 4 or 5, wherein the blow-by gas suction passage (84) is provided at an end of the valve gear chamber (37) in an axial direction of the camshaft (18) at a position overlapping the camshaft (18) when viewed from the axial direction of the camshaft (18).

7. A device according to at least one of the claims 4 to 6, wherein one end of the cylinder head (4) in an axial direction of the crankshaft (12) is connected to a transmission chamber (55) storing a transmission member (32) configured to transmit a rotation of the crankshaft (12) to the camshaft (18),
one end of the valve gear chamber (37) in the axial direction of the crankshaft (12) communicates with a crank chamber (13) via the transmission chamber (55),
the head cover (8) includes a fresh air chamber (62) including a fresh air inlet (74) and a fresh air outlet (82),
the fresh air inlet (74) is connected to an intake air passage (24) on a downstream side of an air cleaner (25),
the fresh air outlet (82) is provided at a portion in the valve gear chamber (37) close to the transmission chamber (55), and
the upstream end of the blow-by gas suction passage (84) is provided at an end of the valve gear chamber (37) on an opposite side of the transmission chamber (55).

8. A device according to at least one of the claims 4 to 7, wherein the vicinity of the bottom wall (28) in which the upstream end of the blow-by gas suction passage (84) forms the opening is located between the camshaft (18) and the bottom wall (28) when viewed from an axial direction of the crankshaft (12).

9. An engine having a gas-liquid separation device (9) for blow-by gas according to at least one of the claims 1 to 8.
